# EUROPEAN PATENT SPECIFICATION

(11) **EP 2 213 513 B1**
(45) Date of publication and mention of the grant of the patent: **07.09.2016**
(21) Application number: 09425023.0
(22) Date of filing: 28.01.2009
(51) Int. Cl.: B60Q 1/068, B60Q 1/076

(54) **Device for adjusting the inclination of an optical axis of a lighting device for vehicles**
Vorrichtung zur Einstellung der Neigung einer optischen Achse einer Beleuchtungsvorrichtung für Fahrzeuge
Dispositif de réglage de l'inclinaison d'un axe optique d'un dispositif d'éclairage pour véhicules

(43) Date of publication of application: 04.08.2010
(73) Proprietor: Automotive Lighting Italia S.p.A., 10078 Venaria Reale (Torino) (IT)
(72) Inventor: Toso, Roberto, 10040 Druento (IT); Vagliera, Cristiano, 10093 Collegno (IT); Pellegrini, Daniele, 10036 Settimo Torinese (IT)
(74) Representative: Plebani, Rinaldo

(56) References cited:
- EP-A- 0 588 725
- EP-A- 0 595 267
- EP-A- 1 083 088
- EP-A- 1 125 791
- DE-A1-102005 031 809
- DE-U1- 20 202 442

## Description

The present invention relates to a device for adjusting the inclination of an optical axis of a lighting device for vehicles. Specifically, it relates to a motor vehicle headlight provided with an improved headlight alignment adjuster.

It is known that the so-called "headlight alignment adjuster" is a motorized device for adjusting the angle formed by the optical axis of a vehicle headlight and the ground, and must be designed and installed on the headlight so as to indeed provide the correct vertical adjustment of the dipped beam of the headlight under the various conditions of vehicle load and/or setup, as required by international regulations.

Furthermore, the headlight must also be provided with a manual, vertical and horizontal adjustment feature, which allows to firstly place the dipped beam in the nominal orientation position.

Unfortunately, in today's cars, the space available for the headlights has become increasingly limited, specifically in the longitudinal direction of the vehicle, due to the engine and all the other servo mechanisms and service liquid vessels being simultaneously present in the engine bay. Even the rounded shape of the front bodywork of vehicles, required both for stylistic and aerodynamic reasons, reduces the space available in the side zones of the engine bay, i.e. precisely where the headlights are installed.

In order to reduce the lateral bulk of the adjuster device, it is known from US-A-4524407 to make the manual and the motorized adjustments on a single axis, by arranging the manual and the motorized adjusters in series, fastened on opposite sides by a same pin fastened to the headlight reflector. In addition to being relatively complex to be implemented, however, such a solution has a large axial bulk in any case. A large bulk also results from the solutions disclosed in EP0588725, DE20202442, EP1083088.

It is therefore an object of the present invention to overcome the drawback of the prior art, specifically by providing a headlight alignment adjuster device which simultaneously has low implementation costs, high compactness and easy assembly, while allowing to best exploit the spaces left free in the current headlights layout.

According to the present invention, a device for adjusting the inclination of an optical axis of a lighting device for vehicles is thus provided, as defined in claim 1.

A lighting device, such as a vehicle headlight, equipped with such an adjusting device, and an associated vehicle are further provided.

Specifically, according to one aspect of the invention, the alignment adjustment of the optical axis is achieved by rotating a reflector pivotally carried about an horizontal axis by a cup-shaped body of the lighting device, inside the same, by means of an adjusting device comprising: a first shaft supported in use by the cup-shaped body, so as to protrude inside the same, manual adjustment means for translating the first shaft along a symmetry axis thereof, and a second shaft, provided with driving means for translating the second shaft along a symmetry axis thereof. The second shaft and the corresponding driving means are carried by a slide engaged into guides integral in use with the cup-shaped body, arranged parallel to the first shaft by the side of the reflector.

The first shaft is axially fastened integral with the slide so as to translate it along the guides upon the actuation of the manual adjustment means; instead, the second shaft is arranged parallel to the first and has a free end axially projecting so as to protrude from the driving means within an empty space delimited by respective longitudinal sides of the slide; the latter may be frame-shaped, in which case such an empty space is delimited by respective side members of the slide, or cradle-shaped; the free end of the second shaft is axially movable with respect to the slide, within the aforesaid empty space, for the whole axial stroke of the second shaft, and is provided with means for the connection to the reflector.

The reflector is preferably mounted so as to be integral with an annular frame, pivotally carried about the aforesaid horizontal axis of the cup-shaped body, transversally to the same, and the free end of the second shaft is connected to the annular frame, eccentrically to the pivoting axis thereof, by means of the aforesaid connecting means, which include a ball joint and a transversal bar which laterally extends so as to protrude from the second shaft and which is connected to the free end of the same by means of a snap-connecting element carried by the ball joint.

This is preferably obtained within a block shaped so as to snappingly receive a first concave end of the side bar fitted on the same.

Therefore, the first and second shafts may be arranged either coaxial or simply parallel to each other, depending on the available space, but always in a highly compact manner and, especially, without the two shafts being directly connected to each other, as occurs instead in the device according to US-A-4524407, thus simplifying the whole structure of the device itself, as well as considerably simplifying its operation, while maintaining the two shafts substantially connected "in series", which represents a great advantage as compared to the other adjusting devices of the prior art, in which the automatic adjustment, by means of a motor, and the manual adjustment are actually carried out "in parallel", with the two adjusters (the manual and automatic adjusters) acting on the reflector in the same direction.

Furthermore, according to the invention, driving means for translating the second shaft, including an electric motor, may be arranged towards a mouth of the cup-shaped body, which is closed in use by a lens, in front of and below a pivoting annular frame which, according to the preferred embodiment of the invention, integrally carries the reflector; the guides for the slide carrying the second shaft and the corresponding driving means may then be integrally carried by respective side walls of the cup-shaped body, laterally to the same side of the annular frame, so as to exploit an inner zone of the cup-shaped body of the headlight which is usually left empty.

Further features and advantages of the present invention will be apparent from the following description of two preferred embodiments thereof, merely provided by way of non-limitative example, with reference to the accompanying drawings, in which:
- figure 1 shows an axonometric view of a headlight for vehicles provided with a headlight alignment adjuster device according to the invention;
- figure 2 shows the headlight in figure 1 on enlarged scale and more in detail, which is mounted to the body of a vehicle, not entirely shown for simplicity;
- figure 3 shows the adjuster device of the headlight in figures 1 and 2 on further enlarged scale;
- figure 4 shows an three-quarters, rear axonometric view of the headlight in figure 1;

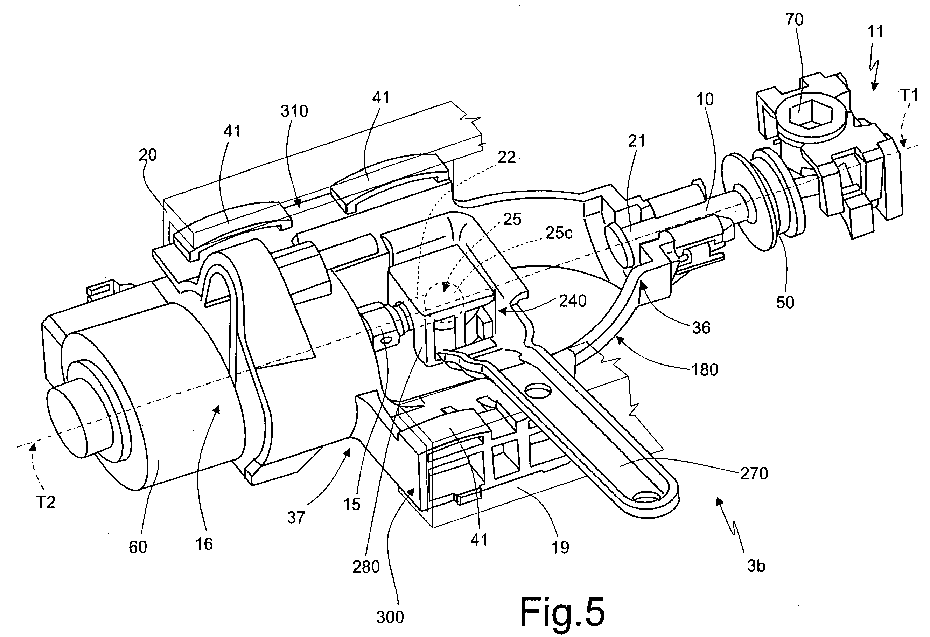

- figure 5 shows the same view in figure 3, but in the case of a different embodiment of the invention; and
- figures 6 and 7 show two details on further enlarged scale in an axonometric view of the adjuster device in figure 5.

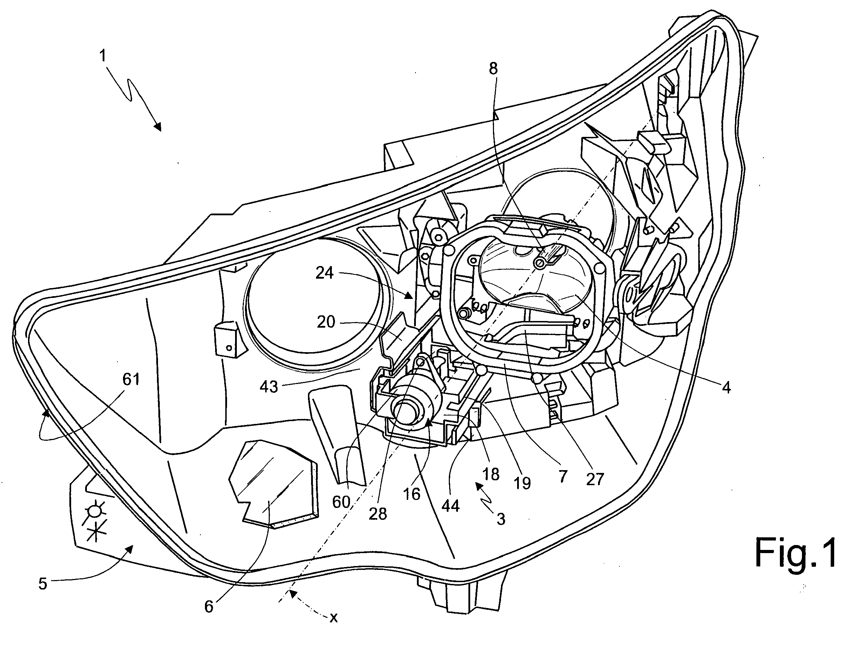

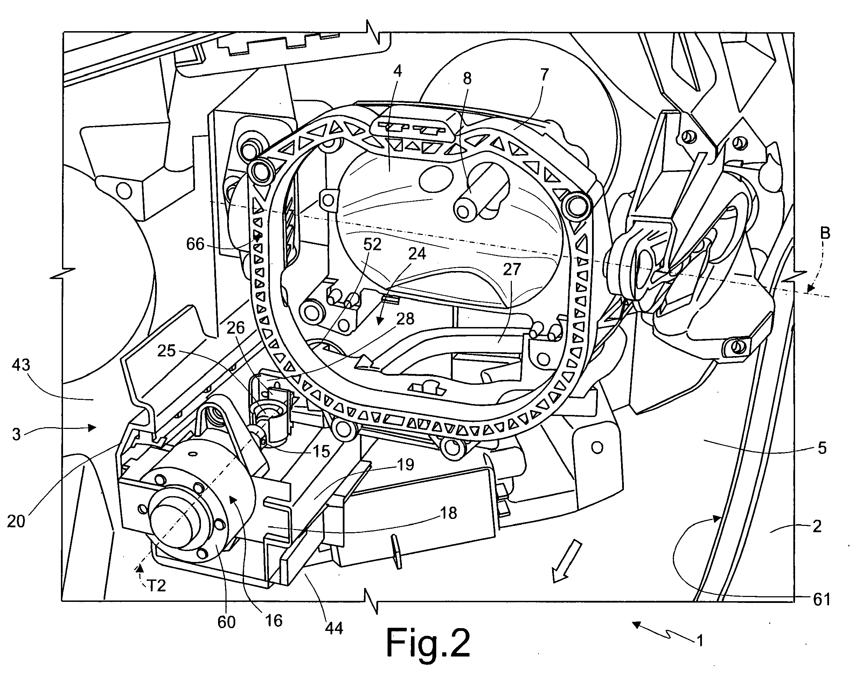

With reference to figures from 1 to 4, numeral 1 indicates as a whole a lighting device for a vehicle 2 (known and, for simplicity, a bodywork portion of which is shown in figure 2 only) provided with a device 3 for adjusting the inclination of an optical axis X (figure 1) of the lighting device 1, in this illustrated case consisting of a front headlight for vehicles.

The device 3 is used to vary the vertical alignment of the axis X with respect to a travel direction of the vehicle, indicated by the arrow in figure 2, by rotating a known reflector 4 pivotally carried about a horizontal axis B by the headlight 1.

Specifically, the headlight 1 comprises a cup-shaped body 5 in use closed at the front by a clear or prismatic lens 6 accommodating at least one reflector 4 and at least one corresponding alignment-adjusting device 3 therein; according to one aspect of the invention, the reflector 4 is integrally mounted to an annular frame 7, which is pivotally carried by the cup-shaped body 5, transversally to the same, about the axis B, which is substantially perpendicular to the optical axis X. The headlight 1 further comprises, for each existing reflector 4, a lamp 8 of any known type, which is arranged usually aligned with the optical axis X and integral with the reflector 4, so as to pivot therewith.

It is worth noting that the lamp 8 could also be carried by the cup-shaped body 5 so as to be fixed, the optical axis X whose alignment is to be adjusted by the device 3 being in all cases determined by the geometry of the reflector 4, thus representing the main radiating direction of the light beam emitted by the headlight 1 in use.

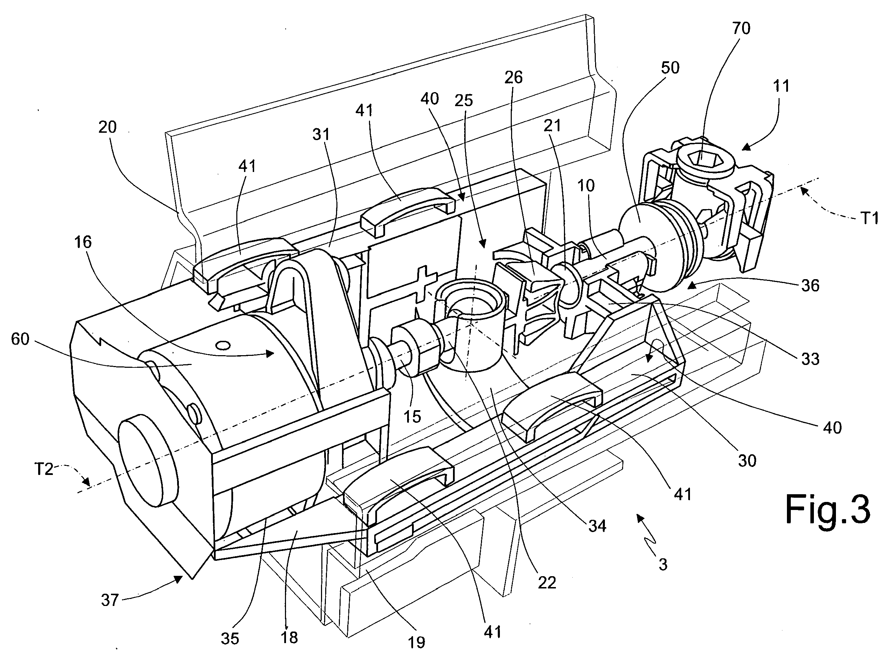

The adjusting device 3 comprises: a first shaft 10 (figure 3) supported in use by the cup-shaped body 5; known manual adjustment means 11 for translating, in a known manner which is not described in detail for simplicity, the shaft 10 along a symmetry axis T1 thereof; and a second shaft 15 provided with driving means 16 for translating the shaft 15 along a symmetry axis T2 thereof.

According to one aspect of the invention, the second shaft 15 and the corresponding driving means 16 are carried by a slide 18 slidingly engaged into guides 19,20 which in use are integral with the cup-shaped body 5 and parallel to the shaft 10, and the latter is idly fastened and axially integral with the slide 18 by one end 21 thereof, so as to be adapted to translate it in use along the guides 18 upon the actuation of the manual adjustment means 11.

The second shaft 15 is arranged parallel to the shaft 10, specifically according to a preferred embodiment it is substantially coaxial to the shaft 10 (so that the axes T1 and T2 coincide), and has a free end 22 which axially projects so as to protrude from the driving means 16 and which in use is axially movable with respect to the slide 18, upon the actuation of the driving means 16, which end 22, according to the invention, is the only element of the device 3 connected to the reflector 4.

For this purpose, the end 22 is provided with means 24 for the connection to the reflector 3 comprising a ball joint 25 integrally carried by the free end 22, a snap-fastening element 26 of any known type carried by the ball joint 25 so as to be able to pivotally protrude from the shaft 15 with respect to the same, and a bar 27 transversally arranged with respect to the axis of the shafts 10,15 and fastened in a known manner at a first end 28 thereof to the snap-fastening element 26, so as to laterally project in order to protrude from the shaft 15, to which the bar 27 is thus integrally fastened to translate parallelly to the guides 19,20 in use.

In this illustrated case, the free end 22 of the second shaft 15 is fastened, by means of the transversal bar 27, not directly to the reflector 4 but to the annular frame 7, in an eccentric position with respect to the horizontal axis B, so that any axial translation of the shaft 15 with respect to the cup-shaped body 5 produces the desired pivoting of the reflector 4 with respect to the cup-shaped body 5.

In the embodiment shown in figure 3, the slide 18 is shaped as a frame defined by a pair of side members 30,31 engaging the guides 19,20, respectively, and by a plurality of cross bars 33,34,35 firmly connecting the side members 30,31 together, which define the opposite longitudinal sides of the slide 18; the shaft 15 is mounted to the slide 18 so as to project in order to protrude into an empty space delimited between the side members 30,31 and a first cross bar 33, defining a first end 36 of the frame, to which the end 21 of the shaft 10 is idly fastened; on the other hand, the driving means 16 for the second shaft 15 are integrally carried by a second end 37 of the frame, opposite to the first so that the shaft 15 may completely carry out its axial translation stroke determined in use by the driving means 16 within the empty space of the frame and always remaining at a distance from the cross bar 33 sufficient to allow the joint 25, the connecting element 26 and the corresponding terminal end of the bar 27 to be accommodated within the frame defining the slide 18.

According to one aspect of the invention, the side members 30,31 are provided on respective corresponding faces 40 thereof, preferably upper faces, of a plurality of flexible shoes 41 arranged in a longitudinal sequence along the side members 30,31 themselves and by which the side members 30,31 engage the guides 19,20 by interference, so as to avoid vibrations, maintain a perfect driving function and, at the same time, drastically reducing manufacturing costs.

The guides 19,20 may be integrally obtained in one piece with the cup-shaped body 5 but, preferably, are defined by metal profiles, e.g. made of aluminium, integrally fixed to respective side walls 43,44 of the cup-shaped body 5; in all cases, the guides 19,20 are substantially C-shaped in their cross section and have respective concavities facing each other.

The shaft 10 (figure 3) axially projects so as to protrude from a support 50, from the opposite side with respect to the manual adjustment means 11, which are also integrally carried by the support 50; the latter may be fixed in use to a through seat 52 of a rear wall 53 of the cup-shaped body 5, so that the shaft 10 projects so as to protrude in use into the cup-shaped body 5 and towards the slide 18.

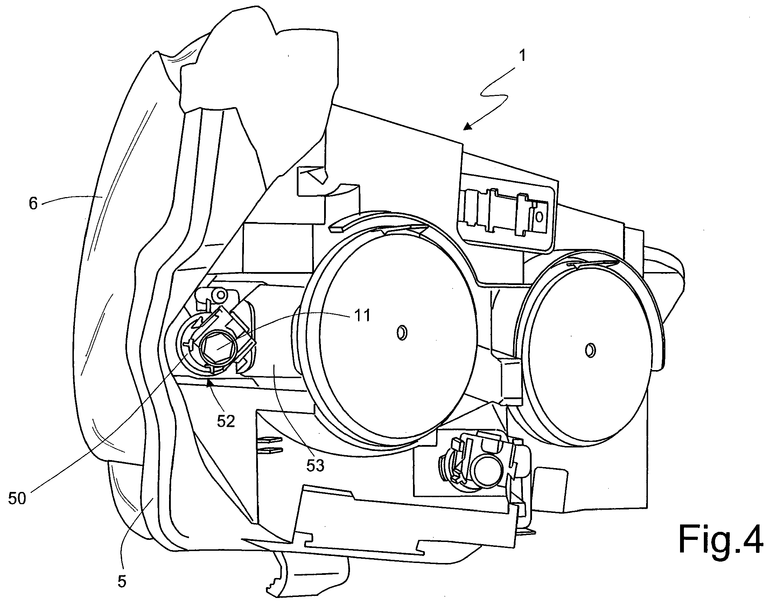

Specifically, the shaft 10 extends so as to protrude into the cup-shaped body 5, from the rear wall 53 of the same, while according to the description above, the manual adjustment means 11 are arranged in use outside the cup-shaped body 5, behind the same (figure 4).

The driving means 16 for translating the second shaft 15 comprise, in addition to the usual means for converting the rotary motion into translating motion (known and not shown), an electric motor 60 arranged towards a mouth 61 of the cup-shaped body 5, closed in use by the lens 6, in front of and below the pivoting annular frame 7 carrying the reflector 4; specifically, the guides 19,20 for the slide 18 carrying the shaft 15 and the corresponding driving means 16 are integrally carried by the side walls 43,44 of the cup-shaped body 5, laterally to a same side 66 (figure 2) of the annular frame 7.

Therefore, the most cumbersome part of the device 3 occupies an inner zone of the cup-shaped body 5 which normally remains empty and which is covered in use by the aesthetic frames of the headlight 1.

According to this description, it is apparent that the alignment of the reflector 4 may be adjusted in a rather simple and efficient manner.

The "one-off" adjustment of the alignment of the optical axis X, usually performed at the factory, is carried out by acting on the manual adjustment means 11, which are easily accessible, as they immediately face the wall 53 and are outside the same. By acting with a tool on an Allen screw sleeve 70 (according to the illustrated embodiment), the shaft 10 is translated along the axis T1, e.g. by unscrewing or screwing it into/from an appropriate nut screw (known and not shown) carried by the support 50; this movement produces the corresponding translation of the whole slide 18 on the guides 19,20, thus also translating the shaft 15 with respect to the cup-shaped body 5, which shaft is now stopped with respect to the slide 18 and which therefore moves integrally therewith. Therefore, the lever 27 is also translated by pivoting the frame and the corresponding reflector 7 in the desired manner.

When the vehicle is traveling, according to its load, an appropriate sensor will intervene on the driving means 16 instead, thus activating the rotation of the motor 60 in either direction; this causes, in a known manner, the shaft 15 to translate in either direction with respect to the slide 18 which, in this configuration, is stationary with respect to the cup-shaped body 5, being kept blocked by the shaft 10, which is stopped. Accordingly, the lever 27 is translated with respect to the fixed guides 19,20, in the empty space between the side members 30,31, thus causing the reflector 4 to pivot again, even when the slide 18 is stationary.

The actuation axis of the shafts 10,15 may be substantially coaxial, as shown, with tolerance deviations equal to or smaller than 0.5 mm, and preferably equal to 0.2 mm, or the axes T1 and T2 may not coincide, but being always parallel, with deviations (distance between axes) of 10, 20, 40, 60 mm.

In both cases, the same components may be used by adapting, if required, the shape/dimensions of the slide 18 with a great scale economy.

With this regards, figures from 5 to 7 show a possible variant 3b of the adjusting device 3 which differs from the above description only for the shape of the slide and means for connecting the side connection bar to the reflector. Similar or equivalent details to those already described will be indicated by the same reference numbers for simplicity.

Specifically, the described slide 18 is replaced by a cradle-shaped slide 180, defined by a half-shell delimiting a concavity towards the shaft 15, which concavity defines the aforesaid empty space available for the movement of the shaft 15 within the slide 180, which space is delimited by the end 36 and opposite longitudinal sides of the slide 180, laterally provided with protruding side members 300,310 parallel thereto for engaging the guides 19,20, for this purpose provided with flexible shoes 41, like those already described for the side members 30,31. The opposite ends 36,37 of the slide 180 are as follows: the first end is fastened to the free end 21 of the shaft 10 and the second end, supporting the motor 60, is bracket-shaped for this purpose.

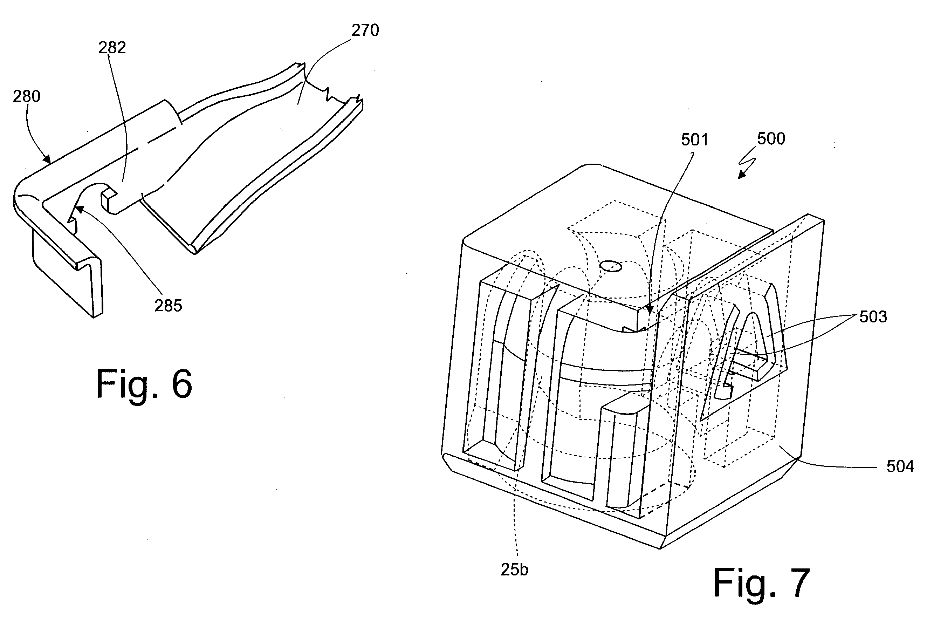

A further difference from the previous description consists in the fastening system of the motion transmission bar; the bar 27 is indeed replaced by a bar 270, a concave-shaped free end 280 of which is snap-fastened in an articulated manner to the free end 22 of the shaft 15 by means of a block 500 (figure 7) carrying the female part 25b of the ball joint 25 obtained therein, the rest being integrally obtained (male part 25c) on the end 22.

Specifically, the end 280 is shaped as a concave C-shaped frame, so as to be fitted outside the block 500, which is substantially shaped as a parallelepiped prism. The latter has a slot 501 into which two flexible fins 503 project so as to protrude therein, which fins are integrally obtained in one piece with one end 504 of the block 500 close to which the slot 501 is made in the block 500 itself.

The end 280 has, in turn, a side 282 shaped so as to be inserted in use into the slot 501 and is provided with a mushroom-shaped recess 285 adapted to snap-engage the fins 503.

Therefore, the whole axial bulk of the snap-fastening system of the bar 27 at the end 22 is eliminated, further allowing the bar 270 to be coupled to the end 22, thus inserting it from the top, i.e. from the side opposite to the slide 180.

## Claims

1. A device (3; 3b) for adjusting the inclination of an optical axis (X) in a lighting device for vehicles, specifically for varying the vertical alignment thereof with respect to a travel direction of the vehicle, by rotating a reflector pivotally carried about a horizontal axis (B) by a cup-shaped body (5) of the lighting device, inside the same, the adjusting device comprising: a first shaft (10) supported in use by said cup-shaped body, manual 1 adjustment means (11) for translating the first shaft along a symmetry axis (T1) thereof, and a second shaft (15) provided with driving means (60) for translating the second shaft along a symmetry axis (T2) whereof; wherein said second shaft (15) and the corresponding driving means are carried by a slide (18; 180) engaged into guides (19,20) integral in use with said cup-shaped body and parallel to the first shaft (10), the latter being axially fastened so as to be integral with the slide so as to translate it along the guides upon the actuation of the manual adjustment means (11); the second shaft (15) being arranged parallel to the first shaft and having a first free end (22), axially projecting so as to protrude from the driving means and axially movable with respect to the slide (18; 180), provided with means (26,27; 270,500) for the connection to the reflector; and wherein said slide (18; 180) is delimited by opposite longitudinal sides having a pair of side members (30,31; 300,310) engaging said guides; the second shaft (15) projecting so as to protrude into an empty space of the slide (18; 180); **characterized in that**, in combination:
i)- said empty space of the slide (18; 180) is delimited between said longitudinal sides and a first end (36) of the slide, to which one end (21) of the first shaft (10) is idly fastened;
ii)- the driving means (60) for the second shaft (15) being integrally carried by a second end (37) of the slide, opposite to the first;
iii)- the second shaft (15) performing a complete axial translation stroke thereof, determined by said driving means within said empty space of the slide.

2. A device according to claim 1, **characterized in that** said side members (30,31; 300,310) are provided on respective faces thereof, preferably upper faces, with a plurality of flexible shoes (41) arranged in longitudinal sequence along the same and by means of which the side members engage the guides (19, 20) by interference, which are substantially C-shaped in cross section and have respective concavities facing each other.

3. A device according to any one of the preceding claims, **characterized in that** said first shaft (10) axially projects so as to protrude from a support (50), on the side opposite to said manual adjustment means, also integrally carried by the support (50), the latter being fixable in use in a through seat cf a rear wall of the cup-shaped body so that the first shaft projects so as to protrude into the cup-shaped body (5) and towards the slide (18; 180).

4. A device according to any one of the preceding claims, **characterized in that** said first and second shafts (10,15) are substantially arranged reciprocally coaxial.

5. A device according to any one of the preceding claims, **characterized in that** said means for the connection to the reflector comprise a ball joint (25) carried by said free end (22) of the second shaft (15) and a snap-fastening element (26; 500) carried by the ball joint so as to be able to pivot in a protruding manner from the second shaft (15) and with respect to the same.

6. A device according to claim 5, **characterized in that** said means for the connection to the reflector further comprise a bar (27;270) arranged transversally to the axis of the first and second shafts and fastened at a first end (28; 280) thereof to said snap-fastening element (26;500), in order to laterally project so as to protrude from the second shaft (15).

7. A lightning device (1) for a vehicle, specifically a headlight for motor vehicles, comprising a cup-shaped body (5) in use closed at the front by a clear or prismatic lens (6), accommodating at least one reflector (4) therein, which is integrally mounted to an annular frame (7), which is pivotally carried by the cup-shaped body, transversally to the same, about a substantially horizontal axis (B), **characterized in that**, in combination:
i)- it further comprises an adjusting device (3; 3b) according to any one of the preceding claims, wherein said free end (22) of the second shaft (15) is fastened, by means of a transversal bar (27; 270), to said frame (7), in an eccentric position with respect to said horizontal axis (B), so that any axial translation of the second shaft (15) with respect to the cup-shaped body (5) causes the reflector (4) to pivot with respect to the cup-shaped body; and wherein the first shaft (10) extends so as to protrude into the cup-shaped body (5), from a rear wall (53) of the same, carried by a support (50) mounted through a through seat (52) of the rear wall (53) of the cup-shaped body, the support (50) carrying said manual adjustment means (11) on the opposite side, so that the latter are arranged outside the cup-shaped body (5), behind the same; and
ii)- said driving means for translating the second shaft comprise an electric motor (60) arranged towards a mouth (61) of the cup-shaped body which is closed in use by said lens, in front of and below said pivoting annular frame (7) carrying the reflector; said guides (19, 20) for the slide (18; 180) carrying the second shaft (15) and the corresponding driving means being integrally carried by respective side walls of the cup-shaped body (5), laterally to a same side of the annular frame (7).

8. A vehicle provided with a lighting device (1) according to claim 7.

## Patentansprüche

1. Vorrichtung (3; 3b) zum Einstellen der Neigung einer optischen Achse (X) in einer Beleuchtungseinrichtung für Fahrzeuge, insbesondere zum Verändern der senkrechten Ausrichtung derselben in Bezug auf eine Fahrtrichtung des Fahrzeugs durch Schwenken eines durch einen becherförmigen Körper (5) der Beleuchtungseinrichtung innerhalb derselben schwenkbar gehaltenen Reflektors um eine horizontale Achse (B), welche Einstellvorrichtung enthält: eine erste Achse (10), die im Betrieb durch den becherförmigen Körper gehalten ist, eine manuelle Einstelleinrichtung (11) zum Verschieben der ersten Achse entlang ihrer Symmetrieachse (T1), und eine zweite Achse (15), die mit einer Antriebseinrichtung (60) versehen ist, um die zweite Achse entlang ihrer Symmetrieachse (T2) zu verschieben; wobei die zweite Achse (15) und die entsprechende Antriebseinrichtung durch einen Schlitten (18; 180) getragen werden, der mit Führungen (19, 20) in Eingriff steht, die im Betrieb mit dem becherförmigen Körper einstückig sind und parallel zu der ersten Achse (10) sind, wobei letztere axial dergestalt befestigt ist, dass sie mit dem Schlitten einstückig ist, um diesen bei Betätigung der manuellen Einstelleinrichtung (11) entlang der Führungen zu verschieben; wobei die zweite Achse (15) parallel zu der ersten Achse angeordnet ist und ein erstes freies Ende (22) hat, das axial vorspringt, sodass es über die Antriebseinrichtung vorragt und in Bezug auf den Schlitten (18; 180) axial beweglich ist und mit Einrichtungen (26, 27; 270, 500) zur Verbindung mit dem Reflektor versehen ist; und wobei der Schlitten (18; 180) durch einander gegenüberliegende Längsseiten begrenzt ist, die ein Paar Seitenelemente (30, 31; 300, 310) aufweisen, die mit den Führungen in Eingriff sind; wobei die zweite Achse (15) vorspringt, sodass sie in einen leeren Raum des Schlittens (18; 180) vorragt;
**dadurch gekennzeichnet, dass** in Kombination:
i)- der leere Raum des Schlittens (18; 180) zwischen den Längsseiten und einem ersten Ende (36) des Schlittens begrenzt ist, wobei die erste Achse (10) an dem einen Ende (21) freilaufend befestigt ist;
ii)- die Antriebseinrichtung (60) für die zweite Achse (15) einstückig von einem zweiten Ende (37) des Schlittens entgegengesetzt zu dem ersten getragen wird;
iii)- die zweite Achse (15) einen vollständigen axialen Verschiebungshub innerhalb des leeren Raumes des Schlittens durch die Antriebseinrichtung bestimmt vollzieht.

2. Vorrichtung nach Anspruch 1, **dadurch gekennzeichnet, dass** die Seitenelemente (30, 31; 300, 310) auf ihren jeweiligen Seiten, vorzugsweise oberen Seiten, mit einer Mehrzahl von flexiblen Schuhen (41) versehen sind, die in Längsabfolge entlang derselben angeordnet sind und mittels welcher die Seitenelemente mit Übermaß mit den Führungen (19, 20) in Eingriff stehen, die im Wesentlichen einen C-förmigen Querschnitt haben und jeweilige aufeinander zu weisende Hohlräume haben.

3. Vorrichtung nach einem der vorhergehenden Ansprüche, **dadurch gekennzeichnet, dass** die erste Achse (10) axial vorspringt, sodass sie über eine Halterung (50) auf der der manuellen Einstelleinrichtung gegenüberliegenden Seite vorragt, ebenfalls einstückig durch die Halterung (50) gehalten ist, wobei letztere im Betrieb in einem Durchgangssitz einer Rückwand des becherförmigen Körpers dergestalt befestigbar ist, dass die erste Achse vorspringt, so dass sie in den becherförmigen Körper (5) und zu dem Schlitten (18; 180) hin vorragt.

4. Vorrichtung nach einem der vorhergehenden Ansprüche, **dadurch gekennzeichnet, dass** die erste und die zweite Achse (10, 15) im Wesentlichen umgekehrt koaxial angeordnet sind.

5. Vorrichtung nach einem der vorhergehenden Ansprüche, **dadurch gekennzeichnet, dass** die Einrichtung zur Verbindung mit dem Reflektor ein Kugelgelenk (25) aufweist, das von dem freien Ende (22) der zweiten Achse (15) gehalten ist, und ein Schnappverbindungselement (26; 500), das von dem Kugelgelenk dergestalt gehalten ist, dass es in von der zweiten Achse (15) vorspringender Weise und in Bezug auf diese schwenkbar ist.

6. Vorrichtung nach Anspruch 5, **dadurch gekennzeichnet, dass** die Einrichtung zur Verbindung mit dem Reflektor ferner eine Stange (27; 270) aufweist, die quer zu der Achse der ersten und der zweiten Achse angeordnet ist und an ihrem ersten Ende (28; 280) an dem Schnappverbindungselement (26; 500) befestigt ist, sodass sie seitlich vorspringt, sodass sie über die zweite Achse (15) vorragt.

7. Beleuchtungseinrichtung (1) für ein Fahrzeug, insbesondere ein Fahrscheinwerfer für Kraftfahrzeuge, enthaltend einen becherförmigen Körper (5), der im Betrieb an der Vorderseite durch ein klares oder prismatisches Scheinwerferglas (6) verschlossen ist und in dem mindestens ein Reflektor (4) untergebracht ist, der einstückig an einem ringförmigen Rahmen (7) befestigt ist, der von dem becherförmigen Körper quer zu diesem um eine im Wesentlichen horizontale Achse (B) schwenkbar gehalten ist, **dadurch gekennzeichnet, dass** in Kombination:
i)- sie ferner eine Einstellvorrichtung (3; 3b) gemäß einem der vorhergehenden Ansprüche aufweist, wobei das freie Ende (22) der zweiten Achse (15) mittels einer Querstange (27; 270) an dem Rahmen (7) in einer exzentrischen Position in Bezug auf die horizontale Achse (B) befestigt ist, sodass eine axiale Verschiebung der zweiten Achse (15) in Bezug auf den becherförmigen Körper (5) das Verschwenken des Reflektors (4) in Bezug auf den becherförmigen Körper verursacht; und wobei die erste Achse (10) so verläuft, dass sie von seiner Rückwand (53) in den becherförmigen Körper (5) vorragt, gehalten durch eine Halterung (50), die durch einen Durchgangssitz (52) der Rückwand (53) des becherförmigen Körpers befestigt ist, wobei die Halterung (50) die manuelle Einstelleinrichtung (11) auf der gegenüberliegenden Seite trägt, so dass letztere außerhalb des becherförmigen Körpers (5) hinter diesem angeordnet ist; und
ii)- die Antriebseinrichtung zum Verschieben der zweiten Achse einen Elektromotor (60) aufweist, der in Richtung einer Öffnung (61) des becherförmigen Körpers, welche im Betrieb durch das Glas verschlossen ist, vor und unterhalb des den Reflektor tragenden ringförmigen schwenkbaren Rahmens (7) angeordnet ist; wobei die Führungen (19, 20) für den Schlitten (18; 180), der die zweite Achse (15) und die entsprechende Antriebseinrichtung trägt, durch die jeweiligen Seitenwände des becherförmigen Körpers (5) seitlich auf derselben Seite des ringförmigen Rahmens (7) einstückig gehalten sind.

8. Fahrzeug, versehen mit einer Beleuchtungseinrichtung (1) nach Anspruch 7.

## Revendications

1. Dispositif (3 ; 3b) pour ajuster l'inclinaison d'un axe optique (X) dans un dispositif d'éclairage pour véhicules, en particulier pour varier son alignement vertical par rapport à une direction de déplacement du véhicule, en faisant tourner un réflecteur porté de manière pivotante autour d'un axe horizontal (B) par un corps en forme de tasse (5) du dispositif d'éclairage, à l'intérieur de ce dernier, le dispositif d'ajustement comprenant : un premier arbre (10) supporté, à l'usage, par ledit corps en forme de tasse, des moyens d'ajustement manuel (11) pour translater le premier arbre le long de son axe de symétrie (T1) et un second arbre (15) prévu avec des moyens d'entraînement (60) pour translater le second axe le long de son axe de symétrie (T2) ; dans lequel ledit second arbre (15) et les moyens d'entraînement correspondants sont portés par une glissière (18 ; 180) mise en prise dans des guides (19, 20) solidaires, à l'usage, avec ledit corps en forme de tasse et parallèles au premier arbre (10), ce dernier étant axialement fixé afin d'être solidaire avec la glissière pour la translater le long des guides suite à l'actionnement des moyens d'ajustement manuel (11) ; le second arbre (15) étant agencé parallèlement au premier arbre et ayant une première extrémité libre (22), faisant saillie axialement afin de faire saillie à partir des moyens d'entraînement et axialement mobile par rapport à la glissière (18 ; 180), prévue avec des moyens (26, 27 ; 270, 500) pour le raccordement au réflecteur ; et dans lequel ladite glissière (18 ; 180) est délimitée par des côtés longitudinaux opposés ayant une paire d'éléments latéraux (30, 31 ; 300, 310) mettant en prise lesdits guides ; le second arbre (15) faisant saillie afin de faire saillie dans un espace vide de la glissière (18 ; 180) ; **caractérisé en ce que**, en combinaison :
i) ledit espace vide de la glissière (18 ; 180) est délimité entre lesdits côtés longitudinaux et une première extrémité (36) de la glissière, à laquelle une extrémité (21) du premier arbre (10) est fixée de manière inactive ;
ii) les moyens d'entraînement (60) pour le second arbre (15) étant portés de manière solidaire par une seconde extrémité (37) de la glissière, opposée à la première ;
iii) le second arbre (15) réalisant sa course de translation axiale complète, déterminée par lesdits moyens d'entraînement à l'intérieur dudit espace vide de la glissière.

2. Dispositif selon la revendication 1, **caractérisé en ce que** lesdits éléments latéraux (30, 31 ; 300, 310) sont prévus sur leurs faces respectives, de préférence les faces supérieures, avec une pluralité de patins flexibles (41) agencés en séquence longitudinale le long de ces derniers et au moyen desquels les éléments latéraux mettent en prise les guides (19, 20) par interférence, qui sont sensiblement en forme de C en coupe et ayant des concavités respectives se faisant face.

3. Dispositif selon l'une quelconque des revendications précédentes, **caractérisé en ce que** ledit premier arbre (10) fait axialement saillie afin de faire saillie à partir d'un support (50), sur le côté opposé auxdits moyens d'ajustement manuel, également porté de manière solidaire par le support (50), ce dernier pouvant être fixé, à l'usage, dans un siège débouchant d'une paroi arrière du corps en forme de tasse de sorte que le premier arbre fait saillie afin de faire saillie dans le corps en forme de tasse (5) et vers la glissière (18 ; 180).

4. Dispositif selon l'une quelconque des revendications précédentes, **caractérisé en ce que** lesdits premier et second arbres (10, 15) sont sensiblement agencés de manière réciproquement coaxiale.

5. Dispositif selon l'une quelconque des revendications précédentes, **caractérisé en ce que** lesdits moyens pour le raccordement au réflecteur comprennent un joint sphérique (25) porté par ladite extrémité libre (22) du second arbre (15) et un élément d'encliquetage (26 ; 500) porté par le joint sphérique afin de pouvoir pivoter en saillie à partir du second arbre (15) et à partir de ce dernier.

6. Dispositif selon la revendication 5, **caractérisé en ce que** lesdits moyens pour le raccordement au réflecteur comprennent en outre une barre (27 ; 270) agencée de manière transversale par rapport à l'axe des premier et second arbres et fixée au niveau de sa première extrémité (28 ; 280) audit élément d'encliquetage (26 ; 500) afin de faire latéralement saillie pour faire saillie à partir du second arbre (15).

7. Dispositif d'éclairage (1) pour un véhicule, en particulier un phare pour véhicules à moteur, comprenant un corps en forme de tasse (5), fermé, à l'usage, à l'avant par une lentille transparente ou prismatique (6), logeant au moins un réflecteur (4) à l'intérieur de ce dernier, qui est monté de manière solidaire sur un bâti annulaire (7) qui est porté de manière pivotante par le corps en forme de tasse, transversalement par rapport à ce dernier, autour d'un axe sensiblement horizontal (B), **caractérisé en ce que**, en combinaison :
i) il comprend en outre un dispositif d'ajustement (3 ; 3b) selon l'une quelconque des revendications précédentes, dans lequel ladite extrémité libre (22) du second arbre (15) est fixée, au moyen d'une barre transversale (27 ; 270) audit bâti (7), dans une position excentrique par rapport audit axe horizontal (B), de sorte que toute translation axiale du second arbre (15) par rapport au corps en forme de tasse (5) provoque le pivotement du réflecteur (4) par rapport au corps en forme de tasse ; et dans lequel le premier arbre (10) s'étend afin de faire saillie dans le corps en forme de tasse (5), à partir d'une paroi arrière (53) de ce dernier, porté par un support (50) monté à travers un siège débouchant (52) de la paroi arrière (53) du corps en forme de tasse, le support (50) portant lesdits moyens d'ajustement manuel (11) sur le côté opposé, de sorte que ces derniers sont agencés à l'extérieur du corps en forme de tasse (5), derrière ce dernier ; et
ii) lesdits moyens d'entraînement pour translater le second arbre comprennent un moteur électrique (60) agencé vers une bouche (61) du corps en forme de tasse qui est fermée, à l'usage, par ladite lentille, à l'avant et au-dessous dudit bâti annulaire pivotant (70) portant le réflecteur ; lesdits guides (19, 20) pour la glissière (18 ; 180) portant le second arbre (15) et les moyens d'entraînement correspondants étant portés de manière solidaire par des parois latérales respectives du corps en forme de tasse (5) latéralement par rapport à un même côté du bâti annulaire (7).

8. Véhicule prévu avec un dispositif d'éclairage (1) selon la revendication 7.
